Europäisches Patentamt

European Patent Office

Office européen des brevets

(11) Publication number: **0 234 118**
**A1**

# EUROPEAN PATENT APPLICATION

(21) Application number: 86309933.9

(22) Date of filing: 18.12.86

(51) Int. Cl.⁴: **E04B 1/80**

(30) Priority: 18.12.85 US 810362
19.11.86 US 932281

(43) Date of publication of application:
**02.09.87 Bulletin 87/36**

(84) Designated Contracting States:
**CH DE FR GB IT LI NL**

(71) Applicant: **Lombardozzi, Lucio**
**22-16 35th Street**
**Astoria New York 11105(US)**

(72) Inventor: **Lombardozzi, Lucio**
**22-16 35th Street**
**Astoria New York 11105(US)**

(74) Representative: **Pritchard, Colin Hubert et al**
**Mathys & Squire 10 Fleet Street**
**London EC4Y 1AY(GB)**

(54) Improved thermal panel.

(57) An improved construction for thermal panels employing a relatively thin base lamina (12) having a plurality of contiguous polgonal recesses (14) on the exposed surfaces thereof, with each of said polygonal recesses having a base surface (20) of thermally radiant reflective character and a relatively thick backing layer of low thermal conductivity insulating material disposed in interfacial engagement with the other surface thereof.

EP 0 234 118 A1

FIG. 2.

This invention relates to thermal insulation and more particularly to an improved construction for thermal insulating panels.

The ever increasing demands for energy and the continually increasing costs of basic fuels have spurred interest not only in energy conservation in general, but, in the increased utilization of thermal insulation in particular. The general efficacy of thermal insulation has been long recognized and expedients ranging from the use of "dead air" space; the use of solid materials of low thermal conductivity; the use of fibrous and cellular materials; the use of coated papers or wallboards of low thermal conductivity; the use of reflective materials, such as aluminum foil, and various combinations and permutations thereof have long been employed for both industrial and residential purposes. In the practical utilization of most of such expedients, the degree of obtainable insulative effect, commonly expressed in terms of an "R" number - normally defined as the ratio of the material thickness divided by its thermal conductivity -is generally proportional to the thickness and/or quantity of insulating material employed. A particular area of concern is that of high temperature environments where, in addition to conventional insulating functions, it is oftentimes desirable to direct and/or delay heat transfer, to assure selectively directed heat transfer or confinement to a given zone or area such as in reaction vessels, piping and the like.

The primary object of this invention is the provision of an impoved construction for thermal insulative panels.

Another primary object of this invention is the provision of an improved construction for thermal insulative panels whose insulative performance is largely dependent upon its geometric character rather than on its size or the nature of its constituent materials.

According to the present invention there is provided an improved thermal panel construction, comprising a lamina having a multiplicity of contiguous polygonal recesses on an exposed surface thereof, each of said polygonal recesses having a concave base surface of thermally radiant reflective character whose focal point is located above the upper marginal edges of said polygonal recesses.

This invention may be briefly described, in its broader aspect, as an improved construction for a relatively thin and compact thermal panel module of increased insulative character and whose insulative performance is largely dependent upon its geometric character rather than on the inherent properties of its constituent materials. In furtherance of such broad aspect, the subject invention include the utilization of a core lamina of relatively low thermal conductivity having a multiplicity of contiguous polygonal recesses on at least one of the exposed surfaces thereof and with each of such recesses having a concave base surface of thermally reflective character whose focal point is located outwardly from the exposed defining edges of such recesses. In a further broad aspect that is of general utility but which is particularly directed for use in higher temperature environments, the subject invention includes the utilization of a relatively thin self-supporting core or base lamina having a multiplicity of contiguous polygonal recesses of the character described on the exposed surface thereof backed up by a relatively thick layer of lesser density insulating material to minimize conductive and/or convective heat transfer therethrough. In a narrower aspect, the exposed surface of the core or base lamina may be coated, in whole or in part, with a layer of material of high heat conductivity to accommodate lateral heat transfer thereon and the contiguous polygonal recesses may be of varying depth with a consequent loction of the focal points thereof at differing levels above the panel surface. In a still narrow aspect the subject invention may include the formation of the relatively thin self suporting core or base lamina from castable ceramic material or from the flame spray plasma deposition of ceramic powder on a suitable mold surface or by a combination of cast ceramic material having the exposed surface coated with a thin layer of highly reflective ceramic material deposited therein by flame spray plasma deposition processes.

Among the advantages of the subject invention is the provision of a self supporting thermal panel capable of utilization as a structural panel and which, in addition to its marked thermal insulative properties, also may serve as an acoustic barrier. Other advantages include the provision of a compact thermal panel possessed of marked insulative properties and whose radiant heat reflective properties become enhanced at extreme high temperatures. Still further advantages include the provision of a compact, inexpensive and easily fabricated thermal panel that provides enhanced insulative properties for energy efficient and economical industrial and home usage. Additional advantages include the accommodation of lateral heat transfer and the provision of shaped thermal panels in accord with the contours of the locus of use thereof.

The invention will now be described, by way of example, with reference to the accompanying drawings, in which:-

Figure 1 is a plan view of a thermal panel module embodying the principles of this invention;

Figure 2 is an enlarged plan view of a portion of the thermal panel illustrated in Figure 1;

Figure 3 is a vertical section as taken on line 3-3 of Figure 2;

Figures 4a through 4d are schematic vertical sections illustrative of possible single or multipanel module combinations of the base panel construction.

Figure 5 is a vertical section taken through a presently preferred thermal panel construction adapted for use in high temperature environments;

Figure 6 is a plan view of the panel shown in Figure 5;

Figures 7 a and 7b are schematic plan and sectional views respectively of an individual polygonal recess structure of the panel shown in Figures 5 and 6, having selective portions of the exposed surface coated with highly thermally conductive material.

Figures 8a and 8b are schematic plan and sectional views respectively of an individual polygonal recess structure of the panel shown in Figures 5 and 6 having one portion of the surface thereof selectively coated with highly thermally conductive material and another portion thereof selectively coated with a high melting point material of high reflectivity.

Figures 9a and 9b are schematic plan and sectional views respectively of an individual polygonal recess structure of the panel shown in Figures 5 and 6 having selective portions of the surface thereof coated with highly thermally conductive material and another potion thereof selectively coated with a high melting point material of high reflectivity.

Figure 10 a is a schematic plan view of an alternative configuration for thermal panel;

Figure 10b is a section as taken on the line 10b-10b on Figure 10a;

Figure 10c is an enlarged sectional view of a portion of Figure 10b.

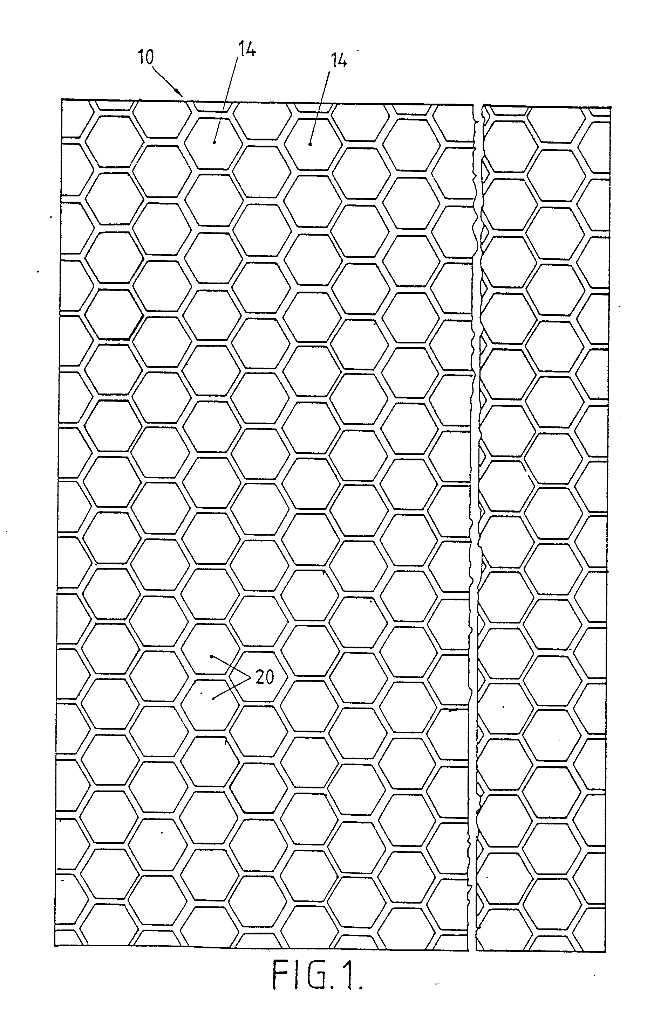

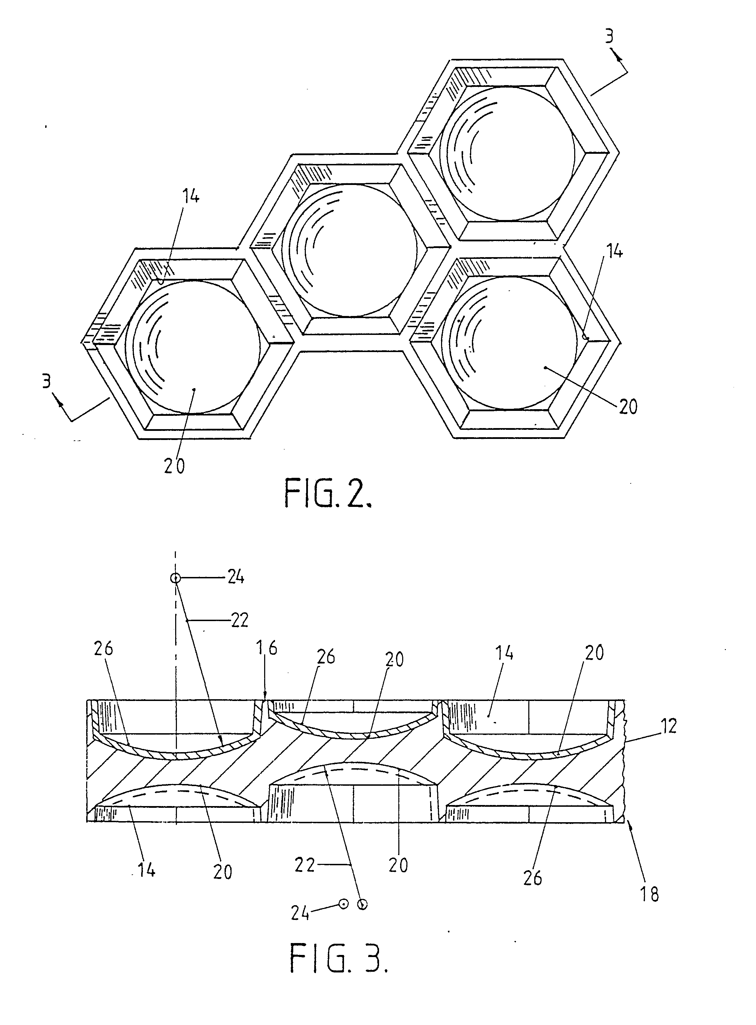

Referring to the drawings and initially to Figures 1-3, the improved thermal panel construction, as depicted by way of example in the form of a thin rectangular module 10 of generally planar character, includes a relatively thin core lamina 12 having a multiplicity of shallow contiguous polygonal recesses 14 on at least one, and preferably on both, of the exposed surfaces 16 and 18 thereof. The core lamina 12 is formed of material of low thermal conductivity and is preferably of rigid character so as to render the module 10 essentially self supporting. The polygonal recesses 14 should be of appropriate character to nest with each other and recesses of hexagonal configuration are highly preferred. As best shown in Figure 3, the depth of such recesses 14 may vary in a predetermined regular pattern so as to lend the core lamina 12 certain truss characteristics for increased mechanical strength.

Each of the recesses 14 includes a concave base surface 20 of high thermally reflective character. The concave base surfaces 20 are suitably in the form of a segment of the surface of a sphere of a radius 22 that locates the focal point 24 a predetermined distance above the surface of the panel. As will now be apparent, the utilization of hexagonal shaped recesses 14 affords a maximum surface area for such concave base surfaces 20. As also best shown in Figure 3, the desired high thermally reflective character for each of the concave base surfaces 20 may, for example, be obtained by the disposition of an overlying thin film of reflective metal 26 on the surface of the core lamina 12.

As pointed out earlier, the insulative performance of the above described thermal panel results largely from its geometry rather than from its constituent materials, although certain properties of the latter such as its melting or softening points, will usually be determinative of the ambient condition limits of its use. The utilization of a core lamina 12 of low thermal heat transfer characteristics and the minimization of effective contact area through the contiguous surface recesses cooperatively function to reduce, if not desirably minimize, heat transfer by conduction through the panel. Similarly, the concave base surfaces 20 of high thermally reflective character serve to reflect incident thermal radiation, which normally includes the infrared spectrum and those portions of the light spectrum having wave lengths of about $10^{-2}$ to $10^{-5}$ centimeters. In such thermal reflection, the focal points of the concave base surfaces 20 will function as localized thermal sources at elevated temperatures in excess of ambient temperature. Such localized elevated termperature thermal sources will permit heat to flow therefrom to encourage radiant heat regeneration and to increase thermal radiation recovery.

As noted above, the constituent materials employed in the fabrication of the described panel, apart from the required low thermal conductivity for the core lamina material and the high thermal reflectivity properties for the concave base surfaces 20, are of concern mainly with respect to the ambient conditions at the locus of intended use thereof. For example, if the core lamina 12 is a moldable resin or polymer, the ambient temperature conditions at the point of usage must be below the softening point of such material. Where high temperature ceramic material is employed for such core lamina 12, the operating range will be permissibly higher. Likewise, in such other instances where a high temperature core material, such as a high temperature ceramic, is employed, the limiting factor may be the melting point of the particular metal utilized to form a more highly efficient thermal radiation reflecting surface 26 on the concave base surface 20.

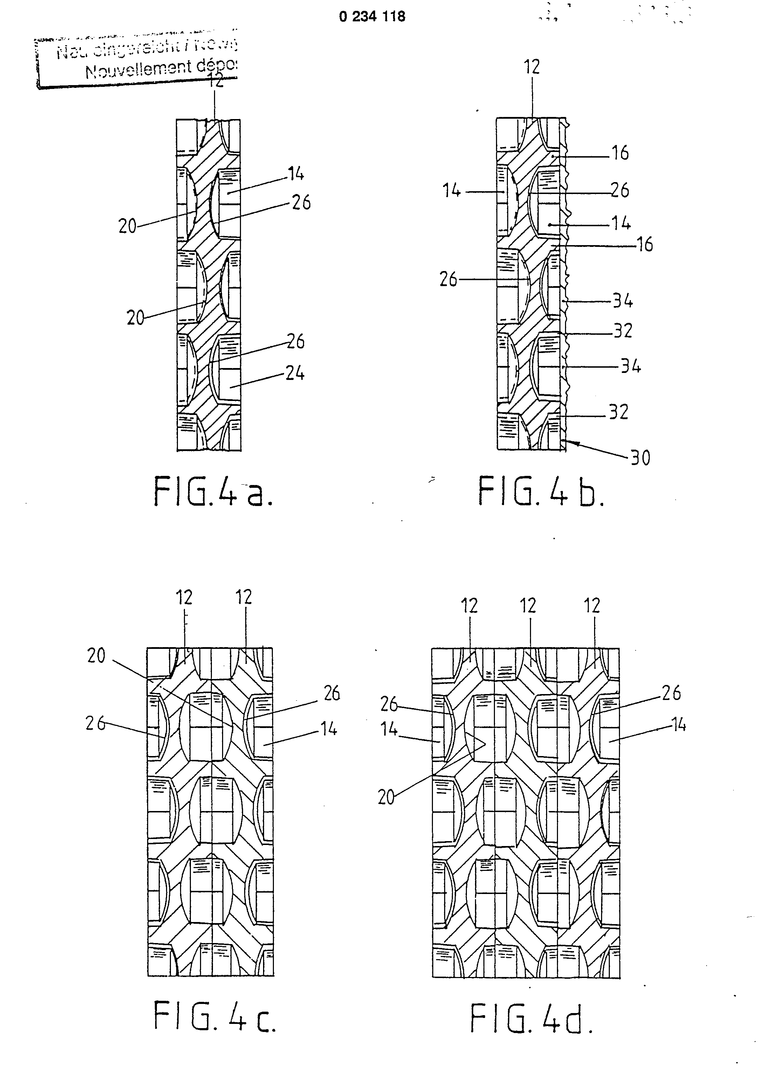

Figures 4a through 4d schematically illustrate how varying combinations of the improved thermal panel construction of both the single reflective coated face and double reflective coated face types can be assembled to form operative modules in accord with the exigencies of any particular locus of use thereof. Figure 4a shows a single core lamina 12 having a reflective coating 26 on one of the exposed recessed surfaces 20 thereof. Figure 4b shows a further configuration employing the principles of this invention. As there shown, one surface 16 may be surmounted by a perforated plate 20 of highly heat conductive metal sheet. As shown, the solid portions 32 of such sheet overly the solid portions of the lamina and the apertures 34 therein are coaxially disposed with respect to the arcuate reflective surfaces located at the bottom of the recesses in the lamina. Figure 4b further shows a single core lamina 12 having a reflective coating 26 on both exposed surfaces thereof. Figure 4c shows a pair of single surface coated core lamina 12 that compositely present a double thickness core having both outwardly exposed surfaces bearing a thermally reflective coating 26. Figure 4d shows three single surface coated cores in interfaced engagement with each other. As will now be apparent to those skilled in this art, many other combinative permutations are possible.

By way of further example, prototype thermal panels embodying the principles of the subject invention have been fabricated employing molded LEXAN resin as a core material. LEXAN is believed to be a thermoplastic polycarbonate condensation product of bisphenol and phosgen and is commercially available from General Electric Corp. of Pittsfield, Mass., as the core lamina 12. LEXAN has a thermal conductivity of about 1.35

$$\frac{Btu-in}{hr-ft- F}$$

as per ASTM C-177 and manufacturer's specifications. The reflective coating, which was applied to the entire exposed surfaces of the core lamina 12 as a matter of convenience, was vacuum metallized aluminum. Such unit was tested in accord with ASTM C-177 test method and produced the following results.

4

SAMPLE J — THICKNESS 0.402

| | 1 | 2 | 3 | 4 | 5* | 6* | 7* |
|---|---|---|---|---|---|---|---|
| Hot face temperature, F | 32.6 | 96.54 | 183.58 | 213.88 | 349.31 | 403.20 | 264.22 |
| Cold face temperature, F | 22.91 | 54.05 | 154.40 | 186.42 | 324.43 | 385.90 | 244.93 |
| Average sample temperature, F | 27.76 | 75.29 | 168.99 | 200.15 | 336.87 | 394.60 | 254.58 |
| Thermal conductivity "k" Btu-in/hr-ft$^2$-F | 0.492 | 0.513 | 0.582 | 0.607 | 0.916 | 1.45 | 1.32 |
| Total resistance, R Hr-ft$^2$-F/Btu | 0.82 | 0.78 | 0.69 | 0.67 | 0.44 | 0.28 | 0.31 |
| Total conductance, C Btu/hr-ft$^2$ - F | 1.22 | 1.28 | 1.45 | 1.49 | 2.27 | 3.57 | 3.23 |

* Changing with time (sample above softening point)

SAMPLE F — THICKNESS 0.802

| | 1 | 2 | 3 | 4 | 5 |
|---|---|---|---|---|---|
| Hot face temperature, F | 25.88 | 98.00 | 215.65 | 249.81 | 275.29 |
| Cold face temperature, F | 19.42 | 51.00 | 176.12 | 212.12 | 239.30 |
| Average sample temperature, F | 22.65 | 74.50 | 195.89 | 230.97 | 257.30 |
| Thermal conductivity, k, Btu-in/hr-ft$^2$ -F | 0.517 | 0.538 | 0.612 | 0.646 | 0.673 |
| Total resistance, R, Hr-ft$^2$-F/Btu | 1.55 | 1.49 | 1.31 | 1.24 | 1.19 |
| Total conductance, C Btu/hr-ft$^2$ - F | 0.65 | 0.67 | 0.76 | 0.81 | 0.84 |

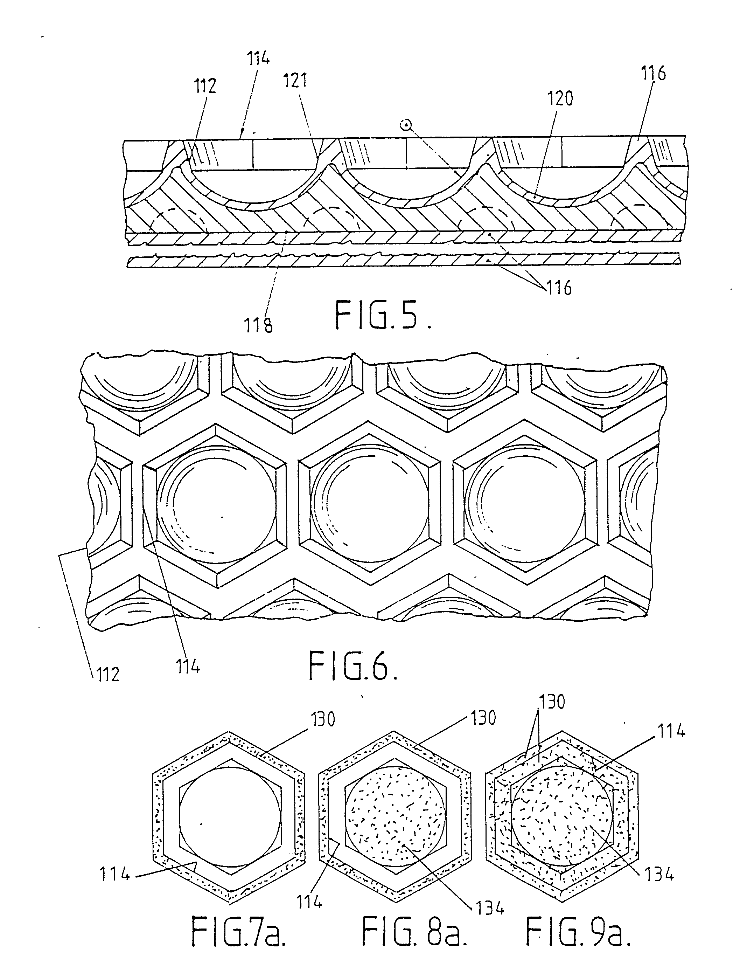

Figures 5 and 6 illustrate a presently preferred construction for thermal panels particularly adapted for use in higher temperature environments. There is here provided a relatively thin core or base lamina 112 having a multiplicity of shallow contiguous polygonol recesses 114 on the upper or exposed surface 16 thereof. The base lamina 112 is here formed of high melting point material and, in a preferred embodiment, is also desirably formed of material of low thermal conductivity. Suitable materials include ceramics such as aluminum oxide, fused or silicon dioxide, aluminumo-silicates and like materials that can withstand ambient temperatures in the order of 1500 to 2000° F and higher. The base lamina 112 is again preferably of rigid character to render it self-supporting, suitably about 010 to 050 inch thick or greater, and can be of a shape that is complemental to the surface contours or other characteristics of its locations of ultimate use. For example, the base lamina 112 can be of planar character for use as a wall or panel member, or can be of semicylindrical configuration if its locus of ultimate use is to enclose or encase a conduit, such as a steam pipe or the like.

The undersurface 118 may be appropriately contour to provide a base lamina 112 of generally uniform thickness. Such base lamina 112 may be formed of castable ceramic materials such as various "Advanced Ceramic Castables" as manufactured by the Cotronics Corporation of Brooklyn, New York. Such base lamina may also be formed by the flame spray plasma deposition of ceramic powder having a high coherent and low adhesive strengths. Alternatively such lamina 112 may be formed of castable ceramic with its surface radiant heat reflectively enhanced by the flame spray plasma deposition of a thin ceramic layer of high reflectivity upon the exposed surface 114 thereof. Bonded or otherwise adherently disposed in interfacial relationship with the undersurface of the base lamina 112 is a relatively thick layer of appropriate insulating material 116 to minimize, if not eliminate, conductive heat transfer therethrough. Suitably, such material may comprise one or more inches of ceramic foam material or one or more inches of fibrous or other type insulating materials of conventional character. As will be apparent to those skilled in this art, the character and thickness of such insulative backing material 116 will be basically dependent upon the ambient conditions that are extant at the locus of use.

As previously described, the polygonal recesses 114 should be of appropriate character to nest with each other and recesses of hexagonal configuration are highly preferred. Each of the recesses includes a sloped side wall configuration 121 of planar character and a base surface 120 of a high thermally reflective character, desirably of concave contours. Such concave base surfaces 120 are suitably in the form of a sphere of a radius 122 that locates the focal point 124 a predetermined distance above the surface f the panel.

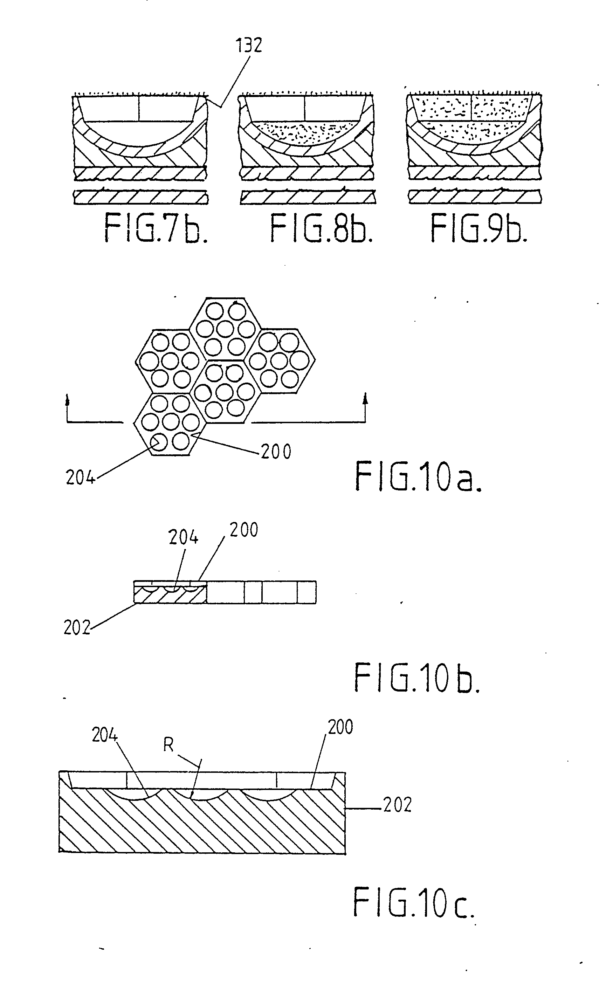

Figures 7a, 7b; 8a, 8b; and 9a, 9b are illustrative of various surface finishes applicable to the polygonal recesses 114 to accommodate the complemental functions of transverse or lateral heat flow and enhanced radiant heat reflection. In Figures 7a and 7b, a coating of high thermal conductivity 130 is selectively located on the upper surfaces 132 of the defining walls of the polygonal recesses 114. Such coating 130 may suitably comprises a thin coating of silver or other metal of high thermal conductivity and will function to effect conductive heat transfer laterally along the surface of the pnael.

Figures 8a and 8b illustrate, in addition to the coating 130 of high thermal conductivity, the deposition of a coating 134 possessing highly reflective properties on the concave base surface 120 to enhance the degree of radiant heat reflection therefrom. Such coating 134 may be of the same or different material as that of the coating 130.

Figures 9a and 9b depict a composite structure wherein the coating 130 of high thermal conductivity is extended to cover the sloped side walls 121 of the polygonal recesses 114 and the concave base surfaces 120 have the coating 134 of high thermally reflective character thereon.

Figures 10a to 10c illustrate a further consturction for a thermal panel. As here illustrated there is provided a hexagonal recess 200 in a ceramic base lamina 202. Each of such recesses includes a plurality of concave base surfaces 204 of high thermally reflective character that function to reflect incident thermal radiation. In such thermal reflection the focal points of the concave base surfaces will again cooperatively function as localized thermal sources at elevated temperatures in excess of ambient temperatures.

As pointed out earlier, the subject panels have exhibited some degree of acoustic barrier properties as well as the above noted insulative characteristics.

## Claims

1. An improved thermal panel construction, comprising a lamina having a multiplicity of contiguous polygonal recesses on an exposed surface thereof, each of said polygonal recesses having a concave base surface of thermally radiant reflective character whose focal point is located above the upper marginal edges of said polygonal recesses.

2. An improved thermal panel construction, comprising a lamina of low thermal conductivity having a multiplicity of contiguous polygonal recesses on at least one of the exposed surfaces thereof, each of said polygonal recesses having a concave base surface of thermally radiant reflective character whose focal point is located above the upper marginal edges of said polygonal recesses.

3. A thermal panel construction as claimed in claim 2, further including a multi-apertured metal sheet disposed in overlying interfacial relation upon the recess defining surface of said exposed surface thereof and wherein the apertures in said metal sheet are disposed in coaxial relation with said concave base surfaces of said recesses.

4. A thermal panel construction as claimed in claim 2, wherein said lamina is of substantially rigid character.

5. A thermal panel construction as claimed in claim 2, wherein said polygonal recesses are of hexagonal configuration.

6. A thermal panel construction as claimed in claim 5, wherein substantially all of said exposed hexagonal recess bearing surface of said lamina is of high thermally reflective character.

7. A thermal panel construction as set forth in claim 5 wherein said concave base surfaces of said recesses are coated with a thin layer of high thermally reflective character.

8. A thermal panel construction as set forth in claim 2, wherein said polygonal recesses are of at least two varying depths.

9. A thermal panel construction as set forth in claim 2, wherein said lamina is of generally planar character and presents a pair of exposed surfaces on either side thereof, each having a mulitiplicity of said polygonal recesses therein.

10. A thermal panel construction as claimed in claim 3, wherein said apertured metal sheet is possessed of high thermal conductivity.

11. An improved thermal panel construction comprising a substantially rigid lamina of generally planar character of low thermal conductivity having a multiplicity of contiguous hexagonal recesses on at least one of the exposed surfaces thereof, each of said hexagonal recesses having an outwardly facing concave base surface whose focal point is located outwardly of the upper defining edges of said recesses and wherein said concave base surface is of high thermally reflective character.

12. A thermal panel construction as claimed in claim 11, further including a multi-apertured metal sheet disposed in overlying interfacial relation upon the recess defining surface of said exposed surface thereof and wherein the apertures in said metal sheet are disposed in coaxial relation with said concave base surfaces of said recesses.

13. A thermal panel construction as claimed in claim 12, wherein said apertured metal sheet is possessed of high thermal conductivity.

14. An improved thermal panel construction comprising a relatively thin and substantially rigid base lamina formed of material having a high melting point and having a multiplicity of contiguous recesses on the exposed surface thereof, each of said polygonal recesses having a concave base surface of thermally radiant reflective character whose focal point is located above the upper marginal edges of said polygonal recesses, and a relatively thick layer of low thermal conductivity insulating material disposed in interfacial engagement with the surface of said lamina disposed remote from said exposed surface thereof.

15. A thermal panel construction as claimed in claim 14, further including a coating of material of high thermal conductivity disposed in interfacial relation upon the recess defining surface of said exposed surface.

16. A thermal panel construction as claimed in claim 14, wherein said polygonal recesses are of hexagonal configuration.

17. A thermal panel construction as claimed in claim 14, wherein said concave base surfaces of said recesses are coated with a thin layer of high thermally reflective character.

18. A thermal panel construction as claimed in claim 14, wherein said relatively thick layer of insulating material is ceramic foam.

19. A thermal panel construction as claimed in claim 14, wherein said base lamina is formed of ceramic material.

20. A thermal panel as claimed in claim 19, wherein said relatively thick layer of insulating material is ceramic foam.

21. A thermal panel as claimed in claim 14, wherein each said polygonal recess includes a plurality of concave base surfaces of thermally reflective characters.

FIG.1.

FIG.2.

FIG.3.

FIG.4 a.

FIG. 4 b.

FIG. 4 c.

FIG. 4 d.

FIG.5.

FIG.6.

FIG.7a.    FIG.8a.    FIG.9a.

FIG.7b.   FIG.8b.   FIG.9b.

FIG.10a.

FIG.10b.

FIG.10c.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.⁴) |
|---|---|---|---|
| Y | US-A-2 747 651  (LIGHTER)  * Column 1, lines 15-20,54-59; column 2, lines 46-51,56-66; column 3, lines 10-69; drawings * | 1,2,5, 7,9 | E 04 B    1/80 |
| A | | 4,11 | |
| | --- | | |
| Y | US-A-1 962 738  (HAHN)  * Page 1, lines 66-83; page 2, lines 29-37; drawings 11,12-15 * | 1,2,5, 7,9 | |
| A | | 4,16 | |
| | --- | | |
| A | US-A-4 164 605  (OKAWA)  * Column 2, line 4 - column 3, line 13; drawings * | 1 | TECHNICAL FIELDS SEARCHED (Int. Cl.⁴) |
| | --- | | |
| A | FR-A-2 237 022  (GAMA) | | E 04 B<br>F 23 N<br>F 16 L<br>F 27 D |
| | ----- | | |

The present search report has been drawn up for all claims

| Place of search | Date of completion of the search | Examiner |
|---|---|---|
| THE HAGUE | 09-06-1987 | LAUE F.M. |